# EUROPÄISCHE PATENTSCHRIFT

(11) **EP 2 047 932 B1**
(45) Veröffentlichungstag und Bekanntmachung des Hinweises auf die Patenterteilung: **07.12.2016**
(21) Anmeldenummer: 08017437.8
(22) Anmeldetag: 04.10.2008
(51) Int. Cl.: B23B 51/02, B28D 1/14

(54) **Bohrer**
Drill
Foret

(30) Priorität: 12.10.2007 DE 202007014367 U
(43) Veröffentlichungstag der Anmeldung: 15.04.2009
(73) Patentinhaber: Keil Werkzeugfabrik Karl Eischeid GmbH, 51766 Engelskirchen (DE)
(72) Erfinder: Bergfelder, Hans Jürgen, 51766 Engelskirchen (DE)
(74) Vertreter: Lippert, Stachow & Partner

(56) Entgegenhaltungen:
- EP-A1- 1 024 246
- DE-A1- 4 012 772
- DE-A1- 10 024 433
- DE-U1-202006 018 724
- US-A1- 2003 118 414

## Beschreibung

Die Erfindung betrifft einen Bohrer gemäß dem Oberbegriff des Anspruchs 1.

Ein bekannter Bohrer ist aus der DE 40 12 772 A1 bekannt. Ein Problem bei diesen Bohrern ist das Auftreten von starken Scherkräfte infolge eingeleiteter Drehmomentkraft bzw. Torsionskraft. In der DE 40 12 772 A1 sind zur Verbesserung der Einleitung der Schlagenergie in das Bohrgut eine in Bohrrichtung vorstehende Zentrierspitze und jeweils eine Unterbrechung der Hauptschneiden. Damit wird das Bohrgut an Zentrierspitze und Restlichen Hauptschneiden leichter zertrümmert und an den Unterbrechungen abgeführt. Dies ermöglicht eine leichtere Übertragung der Drehmomentkraft bzw. Torsionskraft an der Bohrerspitze.

In der US 2003/0118414 A1 wird vorgeschlagen, bei der einstückigen Mehrschneidplatte die Schneiden eines Plattenkörper gegenüber der Bohrspitze und die Bohrspitze gegenüber den Schneiden des anderen Plattenkörpers leicht überstehen zu lassen. Hierdurch wird eine verbesserte Bohrgutabfuhr erzielt, die ein Festlegen der Mehrschneidplatte in den Querschnitt allgemein schwächenden Schlitzen zur Kraftübertragung überflüssig macht.

Ein Bohrwerkzeug mit einzelnen Brechplatten, einer Hauptbrechplatte und einer Nebenbrechplatte, wird in der EP 1 024 246 A1 vorgeschlagen, wobei die Nebenbrechplatte asymmetrisch zur Mittellinie des Bohrwerkzeuges verläuft. Hierdurch wird eine verbesserte Zertrümmerung des Bohrgutes erzielt.

Durch die DE 100 24 433 A1 ist ein Bohrer mit mindestens einem Hartmetallschneidelement an dessen vorderen Ende bekannt, wobei das vordere Ende unter Ausbildung eines zusätzlichen Spanraumes vor dem Hartmetallschneidelement stufenförmig ausgebildet ist.

DE 20 2006 018724 U1 beschreibt einen Bohrer gemäß dem Oberbegriff des Anspruchs 1. mit zwei Plattenkörpern, d.h. einem ersten Plattenkörper und einem zweiten Plattenkörper, jeweils mit zwei Schneidflächen, zwei Schneidgraten und zwei Spanflächen, wobei die zweite Platte rechtwinklig zur ersten Platte so platziert ist, dass die Schneidgrate der zweiten Platte und die Schneidgrate der ersten Platte im Bereich einer gemeinsamen Oberfläche des Kopfendes des Kopfendes des Bohrers zu liegen kommen.

Der Erfindung liegt daher die Aufgabe zugrunde, einen Bohrer der eingangs genannten Art anzugeben, der mit technisch einfachen Mitteln eine bessere Kraftübertragung ermöglicht.

Diese Aufgabe wird bei einem Bohrer der eingangs genannten Art erfindungsgemäß dadurch gelöst, dass der Unterschied der Plattenhöhen mindestens 15% der Gesamthöhe der Mehrschneidplatte beträgt.

Der Kern der Erfindung besteht darin, den Bereich des Bohrkörpers mit Schnitten so wenig wie möglich zu schwächen.

Eine Weiterbildung der Erfindung sieht vor, dass zwei einander benachbarte Schneiden einen Winkel α von 10° bis 90° bilden.

Dabei ist eine Möglichkeit gegeben, wenn der Winkel α zwischen 80° und 90° beträgt.

Eine noch höhere Festigkeit der Mehrschneidplatte ist dann gegeben, wenn der Winkel α zwischen 20° und 40° beträgt. Dies hat zum Vorteil, dass bei den sich kreuzenden Plattenkörpern ein noch größerer Materialbereich integral ausgebildet ist.

Bei einer bevorzugten Weiterbildung der Erfindung ist es vorgesehen, dass der Unterschied der Plattenhöhen mindestens 15% der Gesamthöhe der Mehrschneidplatte beträgt.

Damit die Kraftübertragung der vier Schneiden unterschiedlich groß ist und außerdem der Zermahlungsgrad des gebohrten Materials noch höher ist, ist es vorteilhaft, wenn die vier Schneiden auf vier unterschiedlichen Ebenen liegen.

Eine besonders vorteilhafte Ausführungsform ist dann gegeben, wenn jeweils zwei auf einem Plattenkörper liegende erste und zweite Schneiden einen ersten Plattenhauptwinkel und die beiden anderen Schneiden einen zweiten platten Hauptwinkel aufweisen und dass der erste Plattenhauptwinkel größer als der zweite Plattenhauptwinkel ist. Hierdurch wird beim Schlagbohren die eingesetzte Schlagenergie besser verteilt, und die Hauptschneiden mit den kleineren Winkeln b1 und einer größeren Höhe H2 kann dadurch tiefer ins Bohrmaterial eindringen. Hierdurch wird auch eine deutlich höhere Bohrgeschwindigkeit erreicht.

Eine bessere Zentrierung des Bohrvorgangs ist dann gegeben, wenn eine durch eine Drehachse verlaufende Bohrspitze vorhanden ist.

Damit die Hartmetallplatten besonders an den Außenkanten stabiler sind und eine höhere Biege- und Bruchfestigkeit und auch Verschleißfestigkeit aufweisen, ist es von Vorteil, wenn
mindestens zwei der vier Schneiden jeweils von beidseitig abfallenden Hauptspanflächen gebildet sind, wobei jeweils eine Hauptfreifläche an den Schneiden einen Hauptfreiwinkel mit einer zur Drehachse senkrechten Ebene bildet und jeder Hauptfreiwinkel mit zunehmendem Abstand von der Bohrspitze abnimmt. Durch den mit zunehmenden Abstand von der Bohrspitze abnehmenden Hauptfreiwinkel erhält man eine Absicherung der Hauptschneiden gegen Verschleiß bzw. Abbrechen, insbesondere an den Enden der Hartmetallschneidplatten. Dies ermöglicht eine längere Standzeit. Stark belastet durch die hohen Umdrehungsgeschwindigkeiten und durch die damit verbundenen hohen Umfangsgeschwindigkeiten werden insbesondere die äußeren Bereiche der Hauptschneiden. Durch die vorgeschlagene Vorrichtung können die Außenbereiche praktisch so lange schneidfähig gehalten werden, wie die Spitzenbereiche. Der Spitzenbereich der Hartmetallschneide ist im allgemeinen weniger belastet, weil die Umfangsgeschwindigkeit in den mittleren Bereichen, damit auch der Verschleiß, geringer ist. Durch die vorgeschlagene Vorrichtung wird sowohl der Freiflächenverschleiß als auch der Spanflächenverschleiß und die Kantenrundung im äußeren Bereich der Hauptschneiden vermieden. Ein gleichmäßigerer Verschleiß über die gesamten Hauptschneiden gewährleistet eine vollständige Ausnutzung der Schneidbereiche und verbessert die Kosten-Nutzen-Bilanz. Für die Anwendungen beim Schlag- oder Hammerbohren ist der Spanwinkel vorzugsweise negativ und kann ebenfalls entlang der Hauptschneide dem Freiwinkel entsprechend verändert werden. Auf diese Weise kann entlang der Hauptschneide ein konstanter Keilwinkel unter gleichzeitiger Abnahme des Freiwinkels von der Spitze bis zum Außenbereich eingestellt werden. Wenn die Abnahme des Hauptfreiwinkels stetig erfolgt, kann ein gleichmäßiger Schneidvorgang gewährleistet werden. Auf diese Weise entstehen entlang der Hauptschneide keine Spannungsspitzen, die die Wahrscheinlichkeit eines vorzeitigen Versagens der Hauptschneide an dieser Stelle erhöhen. Damit die Hauptschneide von dem Spitzenbereich abgesetzt ist, ist es erfindungsgemäß möglich, dass die Abnahme des Hauptfreiwinkels in einer bestimmten Entfernung von der Bohrspitze beginnt.

Um die Führung des Bohrers im Bohrloch zu verbessern, ist vorgesehen, dass die Hauptfreifläche mit einem in einer Distanz von der Bohrspitze geänderten Winkel jeder Schneide in eine kegelige Übergangsfläche zwischen der Hauptfreifläche und einer Schmalseitenfläche übergeht. Dies ermöglicht eine insbesondere bei sehr harten Materialien wie beispielsweise Beton die dringend erwünschte, sichere Führung des Bohrers und vermindert die Gefahr des Verrutschens im Sinne von Polygon-Loch-Bildung, was zu übermäßig großen Bohrlöchern und sogar Verletzungen führen kann.

Damit eine noch bessere Zentrierung möglich ist, wird vorgeschlagen, dass die Bohrspitze einen spitzen Winkel aufweist, der kleiner ist, als der Winkel der Schneiden in der Nähe der Übergangsfläche.

Eine weitere Verbesserung der Zentrierspitze wird dadurch erreicht, dass die Hauptfreiflächen mit je einer Auskehlung in die Bohrspitzen übergehen.

Weitere Merkmale und Vorteile der Erfindung ergeben sich aus der folgenden Beschreibung mehrerer Ausführungsbeispiele sowie aus den Figuren, auf die Bezug genommen wird.

Es zeigen:
- Fig.1a u. 1b:: eine Seitenansicht, bzw. eine geschnittene Seitenansicht eines ersten Ausführungsbeispiels;
- Fig.2:: die Draufsicht des in Fig. 1a gezeigten Ausführungsbeispiels;
- Fig.3:: eine Seitenansicht eines zweiten Ausführungsbeispiels;
- Fig.4:: die Draufsicht des in Fig. 3 gezeigten Ausführungsbeispiels.

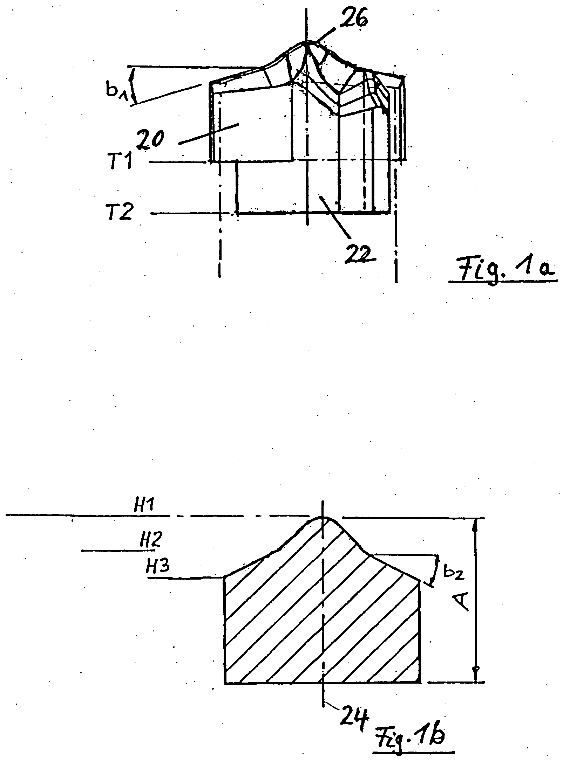

Anhand der Figuren 1 bis 4 werden nunmehr zwei Ausführungsbeispiele eines Bohrers mit einer Mehrschneidplatte 10 beschrieben. Aus Einfachheitsgründen wurde die Bohrwendel, die die Mehrschneidplatte 10 trägt, weggelassen.

In allen Figuren sind Mehrschneidplatten 10 für einen Bohrer dargestellt. Dieser Bohrer bzw. dessen Bohrwendel oder Bohrkörper, ist an seinem vorderen Ende mit Schlitzen versehen. Diese Schlitze dienen der Aufnahme der Mehrschneidplatte 10 die, wie in den Figuren gezeigt, entweder X-förmig oder kreuzförmig ausgebildet ist.

Dadurch weist jede Mehrschneidplatte 10 erste bis vierte Schneiden 12,14,16 und 18 auf, von denen sich jeweils zwei auf ersten und zweiten sich kreuzenden Plattenkörpern 20 und 22 befinden. Selbstverständlich sind die ersten und zweiten Plattenkörper integral miteinander verbunden und bestehen aus Hartmetall.

Bei beiden Ausführungsbeispielen besteht die Besonderheit darin, dass die beiden ersten und zweiten Plattenkörper 20 und 22 jeweils unterschiedliche Höhen aufweisen und zwar Plattenhöhen T1 und T2. Dadurch können die nicht dargestellten Schlitze in der Bohrwendel unterschiedliche Tiefen aufweisen, so dass dort weniger Material beseitigt werden muss. Dies erhöht auch noch die Festigkeit des vorderen Endes des Bohrers.

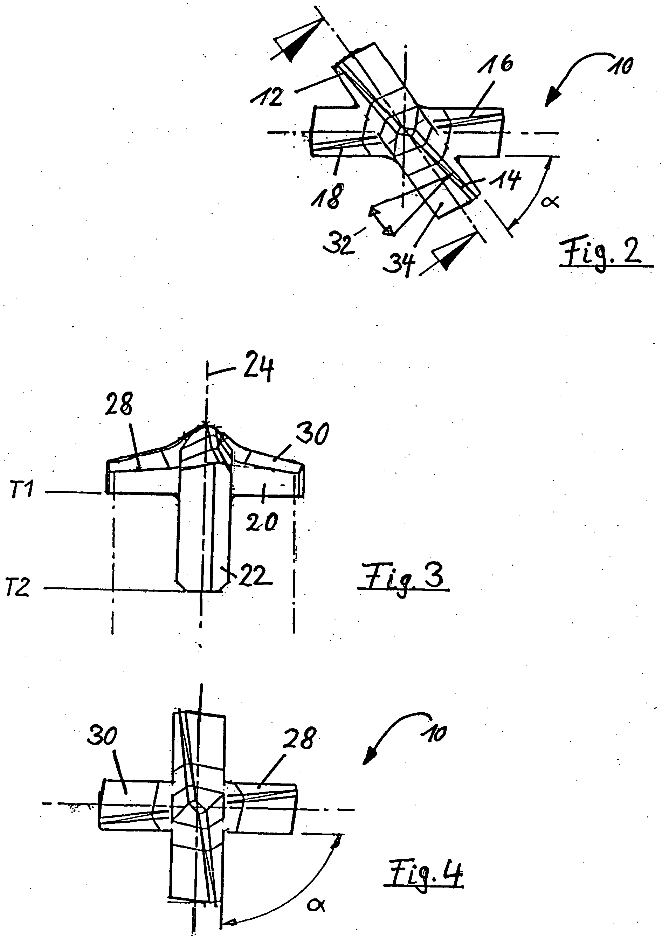

Die beiden ersten und zweiten Plattenkörper 20 und 22 weisen bei dem in den Figuren 1 und 2 dargestellten ersten Ausführungsbeispiels einen Kreuzungswinkel α von 20 bis 40° auf. Bei dem dargestellten Fall beträgt der Winkel α ca. 40°.

Dadurch ist es möglich, dass zwischen den ersten und zweiten Plattenkörpern 20 und 22 ein viel höherer Grad an gemeinsamen Material vorhanden ist, wodurch die Festigkeit der Mehrschneidplatte 10 stark erhöht ist. Aufgrund der entsprechenden Nähe zwischen vorlaufender und nachlaufender Schneide bildet das Material der Mehrschneidplatte 10 der nachlaufenden Schneide quasi einen Stützabschnitt für die vorlaufende Schneide.

Bei dem zweiten Ausführungsbeispiel gemäß Figuren 3 und 4 beträgt der Winkel im gezeigten Fall 90°, kann aber auch 80° betragen. Damit dabei keine große Schwächung des vorderen Endes der Bohrerwendel auftritt, ist die Höhe T1 des ersten Plattenkörpers 20 gemäß der Figur 3 wesentlich geringer als die Höhe T2 des zweiten Plattenkörpers 22. Auch dies stellt sicher, dass bei dem vorderen Ende des Bohrers wenig Material für die Schlitze zur Aufnahme der Mehrschneidplatte 10 entfernt werden muss.

Bei Versuchen hat sich herausgestellt, dass der Unterschied der Plattenhöhen T1 und T2 mindestens 15% der Gesamthöhe A der Mehrschneidplatte 10 beträgt. Die Gesamthöhe A ist in Fig. 1b dargestellt.

Wie sich aus den Fig. 1a und 1b ergibt, weisen alle vier Schneiden 12,14,16 und 18 vier unterschiedliche Höhen auf, damit sie nicht alle gleichzeitig in das zu bohrende Material eingreifen müssen.

Des Weiteren ist aus den Fig. 1a und 1b entnehmbar, dass jeweils zwei auf einem Plattenkörper 20 liegende erste und zweite Schneiden 12 und 14 einen ersten Plattenhauptwinkel b1 und die beiden anderen Schneiden 16 und 18 einen zweiten Plattenhauptwinkel b2 bilden. Dabei ist deutlich zu sehen, dass der erste Plattenhauptwinkel b1 größer ist, als der zweite Plattenhauptwinkel b2. Dadurch kann sich die beim Schlagbohren eingesetzte Schlagenergie besser verteilen und die Schneide mit dem kleineren Winkel b1 unter größerer Höhe H2 tiefer ins Bohrmaterial eindringen. Dadurch wird eine deutlich höhere Bohrgeschwindigkeit erreicht.

Eine weitere Besonderheit besteht bei beiden Ausführungsbeispielen darin, dass eine durch eine Drehachse 24 verlaufende Bohrspitze 26 vorhanden ist.

Des Weiteren ist es vorgesehen, dass mindestens zwei der vier Schneiden 12,14 oder 16,18 jeweils von beidseitig abfallenden Hauptspanflächen gebildet sind. Dabei bildet jeweils eine Hauptfreifläche 30 an den Schneiden 12,14,16 und 18 einen Hauptfreiwinkel 32 mit einer zur Drehachse 24 senkrechten Ebene.

Des Weiteren nimmt jeder Hauptfreiwinkel 32 mit zunehmendem Abstand von der Bohrspitze 26 ab.

Damit dabei ein noch ruhigerer Bohrvorgang möglich ist, erfolgt die Abnahme des Hauptfreiwinkels 32 stetig.

Allerdings ist zu bemerken, dass die Abnahme des Hauptfreiwinkels 32 erst in einer bestimmten Entfernung von der Bohrspitze beginnt, um der Bohrspitze 26 eine bessere Ausprägung zu geben.

Dies wird dadurch noch erreicht, dass die Hauptfreifläche 28 mit einem in einer Distanz von der Bohrspitze 26 geänderten Winkel jeder Schneide 12,14,16 und 18 in eine kegelige Übergangsfläche zwischen der Hauptfreifläche 28 und einer Schmalseitenfläche übergeht.

Zur besseren Führung der Bohrspitze 26 ist diese mit einem spitzen Winkel versehen, der kleiner ist, als der Winkel der Schneiden 12,14,16 und 18 in der Nähe der Übergangsfläche. Dabei gehen die Hauptfreiflächen 28 mit je einer Auskegelung in die Bohrspitze 26 über.

Mit Hilfe der erfindungsgemäßen Mehrschneidplatte ist es möglich, die Schwingungsbelastung des Hand-Arm-Systems durch deutlich geringere Vibration zu vermindern. Dies entspricht der EU-Vibrationsrichtlinie 2002/44/EG zum Vibrationsschutz.

Des Weiteren ist eine deutlich höhere Lebensdauer der Mehrschneidplatte dadurch gegeben, in dem die Schneidenanzahl verdoppelt worden ist.

Ferner ist die Mehrschneidplatte auch armierungseisenfest und bohrt somit durch armierten Beton.

Schließlich entsteht durch diese Anordnung nicht mehr ein polygones Bohrloch, sondern ein rundes bzw. runderes Bohrloch, so dass eine bessere Passform der in diese Bohrlöcher einzubringenden Materialien gegeben ist.

### Bezugszeichenliste

- 10: Mehrschneidplatte
- 12: 1. Schneide
- 14: 2. Schneide
- 16: 3. Schneide
- 18: 4. Schneide
- 20: 1. Plattenkörper
- 22: 2. Plattenkörper
- 24: Drehachse
- 26: Bohrspitze
- 28: Hauptspanfläche
- 30: Hauptfreifläche
- 32: Hauptfreiwinkel

- α: Winkel
- T1: 1. Plattenhöhe
- T2: 2. Plattenhöhe
- A: Gesamthöhe
- b1: 1. Plattenhauptwinkel
- b2: 2. Plattenhauptwinkel

## Patentansprüche

1. Bohrer, dessen in Bohrrichtung vorderes Ende mit Schlitzen versehen ist zur Aufnahme einer einstückigen Mehrschneidplatte (10), die vier Schneiden (12, 14, 16, 18) aufweist, von denen jeweils zwei auf ersten und zweiten sich kreuzenden Plattenkörpern (20, 22) angeordnet sind, wobei die beiden Plattenkörper (20,22) jeweils eine unterschiedliche Plattenhöhe (T1, T2) aufweisen und die aufnehmenden Schlitze entsprechende Tiefen haben, **dadurch gekennzeichne t**, dass der Unterschied der Plattenhöhen (T1, T2) mindestens 15 % der Gesamthöhe (A) der Mehrschneidplatte (10) beträgt.

2. Bohrer nach Anspruch 1, **dadurch gekennze ichnet**, dass zwei einander benachbarte Schneiden (12, 16, 14, 18) einen Winkel (α) von 10° bis 90° bilden.

3. Bohrer nach Anspruch 2, **dadurch gekennzeichnet, dass** der Winkel (α) zwischen 80° und 90° beträgt.

4. Bohrer nach Anspruch 2, **dadurch gekennzeichnet, dass** der Winkel(α)zwischen 20° und 40° beträgt.

5. Bohrer nach einem der Ansprüche 1 bis 4, **dadurch gekennzeichnet, dass** die vier Schneiden (12, 14, 16, 18) auf vier unterschiedlichen Ebenen liegen.

6. Bohrer nach einem der Ansprüche 1 bis 5, **dadurch gekennzeichnet, dass** jeweils zwei auf einem Plattenkörper (20, 22) liegende erste und zweite Schneiden (12, 14) einen ersten Plattenhauptwinkel (b1) und die beiden anderen Schneiden (16, 18) einen zweiten Plattenhauptwinkel (b2) aufweisen und dass der erste Plattenhauptwinkel (b1) größer ist, als der zweite Plattenhauptwinkel (b2).

7. Bohrer nach Anspruch 1 bis 6, **dadurch gekennzeichnet, dass** eine durch eine Drehachse (24) verlaufende Bohrspitze (26) vorhanden ist.

8. Bohrer nach Anspruch 7, **dadurch gekennzeichnet, dass** mindestens zwei der vier Schneiden (12, 14, 16, 18) jeweils von beidseitig abfallenden Hauptspanflächen gebildet sind, wobei jeweils eine Hauptfreifläche (30) an den Schneiden (12, 14, 16, 18) einen Hauptfreiwinkel (32) mit einer zur Drehachse (24) senkrechten Ebene bildet und jeder Hauptfreiwinkel (32) mit zunehmendem Abstand von der Bohrspitze (26) abnimmt.

9. Bohrer nach Anspruch 7 oder 8, **dadurch geke nnzeichnet,** dass die Abnahme des Hauptfreiwinkels (32) stetig erfolgt.

10. Bohrer nach einem der Ansprüche 7 bis 9, **da- d urch gekennzeichnet**, dass die Abnahme des Hauptfreiwinkels (32) in einer bestimmten Entfernung von der Bohrspitze (26) beginnt.

11. Bohrer nach einem der Ansprüche 7 bis 10, **dadurch gekennzeichnet, dass** die Hauptfreifläche (28) mit einem in einer Distanz von der Bohrspitze (26) geänderten Winkel jeder Schneide (12, 14, 16, 18) in eine kegelige Übergangsfläche zwischen der Hauptfreifläche (28) und einer Schmalseitenfläche übergeht.

12. Bohrer nach einem der Ansprüche 7 bis 11, **dadurch gekennzeichnet, dass** die Bohrspitze (26) einen spitzen Winkel aufweist, der kleiner ist, als der Winkel der Schneiden (12, 14, 16, 18) in der Nähe der Übergangsfläche.

13. Bohrer nach einem der Ansprüche 7 bis 12, **dadurch gekennzeichnet, dass** die Hauptfreiflächen (28) mit je einer Auskehlung in die Bohrspitze (26) übergehen.

## Claims

1. Drill bit, the front end of which, seen in the direction of drilling, is provided with slits for accommodating a one-piece, multi-edge cutting plate (10) that displays four cutting edges (12, 14, 16, 18), two of which are each located on first and second, intersecting plate bodies (20, 22), where the two plate bodies (20, 22) each display a different plate height (T1, T2) and the accommodating slits have corresponding depths, **characterised in that** the difference between the plate heights (T1, T2) is at least 15% of the overall height (A) of the multi-edge cutting plate (10).

2. Drill bit according to Claim 1, **characterised in that** two adjacent cutting edges (12, 16, 14, 18) form an angle (α) of 10° to 90°.

3. Drill bit according to Claim 2, **characterised in that** the angle (α) is between 80° and 90°.

4. Drill bit according to Claim 2, **characterised in that** the angle (α) is between 20° and 40°.

5. Drill bit according to one of Claims 1 to 4, **characterised in that** the four cutting edges (12, 14, 16, 18) lie on four different planes.

6. Drill bit according to one of Claims 1 to 5, **charac**t**erised** in that two first and second cutting edges (12, 14), located on a plate body (20, 22) display a first major plate angle (b1), and the other two cutting edges (16, 18) a second major plate angle (b2), and in that the first major plate angle (b1) is larger than the second major plate angle (b2).

7. Drill bit according to Claims 1 to 6, **characterised in that** a drill tip (26), running through an axis of rotation (24), is present.

8. Drill bit according to Claim 7, **characterised in that** at least two of the four cutting edges (12, 14, 16, 18) are in each case formed by major cutting faces, falling away to both sides, where, in each case, one major flank (30) on the cutting edges (12, 14, 16, 18) forms a main clearance angle (32) with a plane perpendicular to the axis of rotation (24), and each main clearance angle (32) decreases with increasing distance from the drill tip (26).

9. Drill bit according to Claim 7 or 8, **characterised in that** the main clearance angle (32) decreases steadily.

10. Drill bit according to one of Claims 7 to 9, **charac**t e r i s e d in that the decrease in the main clearance angle (32) begins a certain distance away from the drill tip (26).

11. Drill bit according to one of Claims 7 to 10, **characterised in that** the major flank (28) of each cutting edge (12, 14, 16, 18) transitions into a tapered transitional surface between the major flank (28) and a narrow side surface, at an angle that changes at a distance from the drill tip (26)

12. Drill bit according to one of Claims 7 to 11, **characterised in that** the drill tip (26) displays an acute angle that is smaller than the angle of the cutting edges (12, 14, 16, 18) in the vicinity of the transitional area.

13. Drill bit according to one of Claims 7 to 12, **characterised in that** the major flanks (28) each transition into the drill tip (26) with a fillet.

## Revendications

1. Foret, dont l'extrémité avant dans la direction de forage est munie des fentes pour loger une plaquette de coupe multi-lames en une pièce (10) comportant quatre lames (12, 14, 16, 18), dont deux lames sont respectivement disposées sur premiers et deuxièmes corps de plaquette (20, 22) se croisant, les deux corps de plaquette (20,22) présentant chacun une hauteur de plaquette (T1, T2) différente et les fentes de logement présentant des profondeurs correspondantes, **caractérisé en ce que** la différence de hauteur des plaquettes (T1, T2) s'élève à au moins 15% de la hauteur totale (A) de la plaquette de coupe multi-lames (10).

2. Foret selon la revendication 1, **caractérisé en ce que** deux lames adjacentes (12, 16, 14 18) forment un angle (α) de 10° à 90°.

3. Foret selon la revendication 2, **caractérisé en ce que** ledit angle (α) est compris entre 80° et 90°.

4. Foret selon la revendication 2, **caractérisé en ce que** ledit angle (α) est compris entre 20° et 40°.

5. Foret selon l'une des revendications 1 à 4, **caractérisé en ce que** les quatre lames (12, 14, 16, 18) sont situées dans quatre plans différents.

6. Foret selon l'une des revendications 1 à 5, **caractérisé en ce que** deux premières et deuxièmes lames (12, 14) se situant respectivement sur le corps de plaquette (20, 22) présentent un premier angle principal de plaquette (b1) et les deux autres lames (16,18) présentent deuxième angle principal de plaquette et que le premier angle principal de plaquette (b1) est supérieur au deuxième angle principal de plaquette (b2).

7. Foret selon la revendication 1 à 6, **caractérisé en ce qu'**il est présent une pointe de foret (26) s'étendant à travers d'un axe de rotation (24).

8. Foret selon la revendication 7, **caractérisé en ce qu'**au moins deux des quatre lames (12, 14, 16, 18) sont respectivement formées par deux faces de coupe principales descendantes des deux côtés, une surface libre principale (30) respective sur les lames (12, 14, 16, 18) formant un angle libre principal (32) avec un plan perpendiculaire à l'axe de rotation (24), et chaque angle libre principal (32) diminue avec l'augmentation de la distance de la pointe de foret (26).

9. Foret selon la revendication 7 ou 8, **caractérisé en ce que** la diminution de l'angle libre principal (32) s'effectue de façon continue.

10. Foret selon l'une des revendications 7 à 9, **caractérisé en ce que** la diminution de l'angle libre principal (32) commence dans une certaine distance de la pointe de foret (26).

11. Foret selon l'une des revendications 7 à 10, **caractérisé en ce que** la surface libre principale (28) passe, avec un angle de chaque lame (12, 14, 16, 18) modifié à une distance de la pointe de foret (26), dans une surface de transition conique entre la surface libre principale (28) et une face latérale étroite.

12. Foret selon l'une des revendications 7 à 11, **caractérisé en ce que** la pointe de foret (26) présente un angle aigu qui est inférieur à l'angle des lames (12, 14, 16, 18) à proximité de la surface de transition.

13. Foret selon l'une des revendications 7 à 12, **caractérisé en ce que** les surfaces libres principales (28) passe dans la pointe de foret (26), par une gorge respective.
